# EUROPÄISCHE PATENTANMELDUNG

(11) **EP 0 548 483 A2**
(43) Veröffentlichungstag der Anmeldung: **30.06.1993**
(21) Anmeldenummer: 92117571.7
(22) Anmeldetag: 15.10.1992
(51) Int. Cl.: B60J 7/02

(54) **Fahrzeugdach**

(30) Priorität: 20.12.1991 DE 4142267
(71) Anmelder: WEBASTO KAROSSERIESYSTEME GmbH, D-82131 Stockdorf (DE)
(72) Erfinder: Schätzler, Walter, W-8130 Starnberg (DE)

(57) **Zusammenfassung**

Fahrzeugdach mit einem Deckel zum wahlweisen Verschließen oder mindestens teilweisen Freilegen einer Dachöffnung in einer festen Dachfläche. Zu dem Dach gehören ein den Deckel über eine Deckelbetätigungseinrichtung tragender Führungsrahmen, der mit einem an der festen Dachfläche befestigten Verstärkungsteil über Befestigungselemente verbunden ist, die Teil einer Höhenjustiereinrichtung zum Einstellen und Fixieren der Höhenlage des Deckels gegenüber der festen Dachfläche sind, sowie ein Himmel, der den Führungsrahmen und die Höhenjustiereinrichtung von unten verblendet. Dabei ist die Höhenjustiereinrichtung mit Bezug auf den Führungsrahmen derart angeordnet und ausgerichtet, daß sie zwecks Höhenverstellung des Deckels bei montiertem Himmel von einer über dem Himmel liegenden, frei zugänglichen Stelle aus betätigbar ist. Dies erlaubt es, den Himmel, den Führungsrahmen und die Deckelbetätigungseinrichtung zu einer Einbaueinheit zusammenzufassen.

## Beschreibung

Die Erfindung bezieht sich auf ein Fahrzeugdach mit einem Deckel zum wahlweisen Verschließen oder mindestens teilweisen Freilegen einer Dachöffnung in einer festen Dachfläche, mit einem den Deckel über eine Deckelbetätigungseinrichtung tragenden Führungsrahmen, der mit einem an der festen Dachfläche befestigten Verstärkungsteil über Befestigungselemente verbunden ist, die Teil einer Höhenjustiereinrichtung zum Einstellen und Fixieren der Höhenlage des Deckels gegenüber der festen Dachfläche sind, und mit einem mindestens den Führungsrahmen und die Höhenjustiereinrichtung von unten verblendenden Himmel.

Bei einem bekannten Fahrzeugdach dieser Art (DE-PS 1 108 577) besteht die Höhenjustiereinrichtung aus einer an der Oberseite des Verstärkungsteils festgelegten Kastenmutter, einem zwischen das Verstärkungsteil und den Führungsrahmen eingelegten elastischen Glied und einer von unten durch den Führungsrahmen, das elastische Glied und das Verstärkungsteil gesteckten Schraube, die in die Kastenmutter eingeschraubt wird, wobei das elastische Glied unter Einstellung der Höhenlage des Führungsrahmens gegenüber der festen Dachfläche mehr oder minder stark zusammengepreßt wird. Der Himmel deckt den Kopf der Schraube der Höhenjustiereinrichtung von unten ab, so daß in der Preis zunächst der die Deckelbetätigungseinrichtung tragende Führungsrahmen im Fahrzeug montiert und die Höhenjustierung des Führungsrahmens mit Bezug auf die feste Dachfläche vorgenommen werden muß, bevor eine Montage des Himmels möglich wird. Der Führungsrahmen und der Himmel müssen infolgedessen nacheinander montiert werden. Insbesondere kann der Himmel kein Bestandteil einer vorgefertigten und gegebenenfalls funktionsgeprüften Montageeinheit sein, die mindestens den Führungsrahmen und die Deckelbetätigungseinrichtung umfaßt, wie dies an sich aus DE 29 14 855 C2 bekannt ist.

Es ist zwar möglich, den Himmel in dem Bereich, der unterhalb der Höhenjustiereinrichtung liegt, wie sie aus der DE-PS 1 108 557 oder in ähnlicher Form aus DE 36 26 299 C1 und DE 36 42 469 C2 bekannt ist, mit einer Ausnehmung zu versehen, die einen Zugang zu der Höhenjustiereinrichtung erlaubt. Dadurch wird jedoch der optische Eindruck des Himmels empfindlich gestört, selbst wenn die Ausnehmung nachträglich wieder verdeckt oder beispielsweise im Falle eines Festhimmels mittels eines Stöpsels verschlossen wird.

Man hat die Höhenjustiereinrichtung auch bereits als von der Befestigung des Führungsrahmens an dem Verstärkungsteil der festen Dachfläche unabhängige Baugruppe ausgebildet und insbesondere zwischen den Deckel und die Deckelbetätigungseinrichtung gelegt (DE-OS 23 13 453 und Fig. 6 der DE 29 14 855 C2). Dies bedingt jedoch zusätzliche Bauteile und zusätzliche Montagevorgänge beim Fahrzeughersteller, wo nach Befestigung des Führungsrahmens an dem Verstärkungsteil der Deckel gegenüber der festen Dachfläche justiert werden muß.

Der im Anspruch 1 angegebenen Erfindung liegt die Aufgabe zugrunde, ein Fahrzeugdach der eingangs genannten Art zu schaffen, das die beim Fahrzeughersteller notwendigen Montagevorgänge weiter vereinfacht und das eine Höheneinstellung des Deckels mit Bezug auf die feste Dachfläche noch nach Montage des Himmels zuläßt, ohne daß der Himmel dafür mit Zugangsöffnungen oder dergleichen für die Höhenjustiereinrichtung versehen zu werden braucht.

Ausgehend von einem Fahrzeugdach der eingangs genannten Art wird diese Aufgabe erfindungsgemäß dadurch gelöst, daß die Höhenjustiereinrichtung mit Bezug auf den Führungsrahmen derart angeordnet und ausgerichtet ist, daß sie zwecks Höhenverstellung des Deckels bei montiertem Himmel von einer über dem Himmel liegenden, frei zugänglichen Stelle aus betätigbar ist.

Eine entsprechende Anordnung und Ausrichtung ist zwar für Befestigungselemente zur Anbringung des Führungsrahmen an dem an der festen Dachfläche befestigten Verstärkungsteil bekannt (Fig. 2 der DE 28 56 015 C2). Dort bilden diese Befestigungselemente aber keinen Teil der Höhenjustiereinrichtung. Eine solche Justiereinrichtung muß daher an anderer Stelle zusätzlich vorgesehen sein und beim Fahrzeughersteller zusätzlich zum Anziehen der Befestigungselemente verstellt werden, um den Höhenausgleich zwischen dem Deckel und der festen Dachfläche herbeizuführen.

Bei dem Fahrzeugdach nach der Erfindung müssen dagegen beim Fahrzeughersteller lediglich die Befestigungselemente entsprechend angezogen werden, um einerseits die notwendige Verbindung zwischen dem Führungsrahmen und dem Verstärkungsteil der festen Dachfläche herzustellen und um andererseits zugleich für die erforderliche Ausrichtung des Deckels in Höhenrichtung mit Bezug auf die feste Dachfläche zu sorgen, wobei der Himmel bereits vormontiert sein kann und keine Zugangsöffnungen für die Höhenjustiereinrichtung benötigt.

Bevorzugte weitere Ausgestaltungen der Erfindung ergeben sich aus den Unteransprüchen.

Vorzugsweise weist die Höhenjustiereinrichtung die Befestigungselemente bildende Schrauben auf, welche eine Höhenverstellung des Führungsrahmens erlaubende Ausnehmungen in einem mindestens näherungsweise lotrecht verlaufenden Schenkel des Führungsrahmens oder des Verstärkungsteils durchgreifen und in Gewindelöcher des jeweils anderen der beiden letztgenannten Bauteile oder von Bauelementen eingeschraubt sind, die auf der von dem einen Bauteil abliegenden Seite des jeweils anderen Bauteils sitzen.

Die eine Höhenverstellung des Führungsrahmens erlaubenden Ausnehmungen können insbesondere als Langlöcher mit im wesentlichen lotrecht ausgerichteter Längsachse in dem Führungsrahmen ausgebildet sein.

Eine weitere Montagevereinfachung beim Fahrzeughersteller wird dadurch erreicht, daß der Himmel Teil einer mindestens den Führungsrahmen und die Deckelbetätigungseinrichtung umfassenden Einbaueinheit ist.

Der Führungsrahmen kann zweckmäßig eine Randspaltdichtung zum Abdichten des Randspalts zwischen dem in der Schließstellung befindlichen Deckel und dem Rand der Dachöffnung tragen. Diese Randspaltdichtung ist vorzugsweise gleichfalls Teil der vorstehend genannten Einbaueinheit. Auch diese Dichtung braucht dann nicht mehr beim Fahrzeughersteller gesondert montiert zu werden.

Ausführungsbeispiele der Erfindung sind nachstehend anhand der Zeichnungen näher erläutert. Es zeigt:

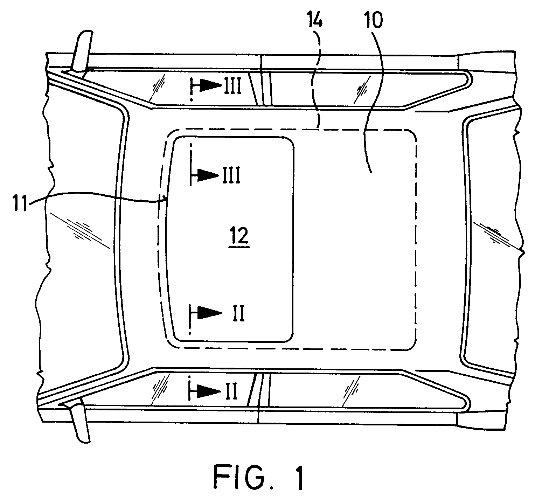

- Fig. 1: die schematische Draufsicht auf ein Fahrzeugdach,
- Fig. 2: den Schnitt entlang der Linie II-II der Fig. 1 für eine erste Ausführungsform von Führungsrahmen und Höhenjustiereinrichtung und
- Fig. 3: den Schnitt entlang der Linie III-III für eine zweite Ausführungsform von Führungsrahmen und Höhenjustiereinrichtung.

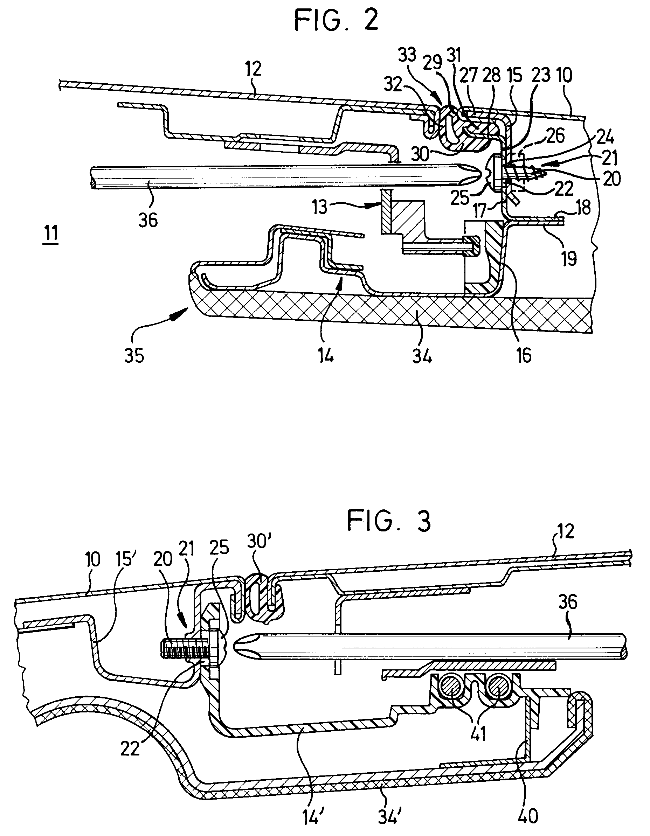

Wie dargestellt, ist in einer festen Dachfläche 10 eines Kraftfahrzeuges eine Dachöffnung 11 vorgesehen. Die Dachöffnung 11 kann mittels eines Deckels 12 wahlweise verschlossen oder mindestens teilweise freigelegt werden. Der Deckel 12 kann dabei in bekannter Weise Teil eines Schiebedaches, eines Hebedaches, eines Schiebehebedaches, eines Spoilerdaches, eines Lamellendaches oder dergleichen sein. Der Deckel 12 wird von einer beliebigen Deckelbetätigungseinrichtung bekannter Art, von der in Fig. 2 bei 13 nur Teile schematisch angedeutet sind, auf einem Führungsrahmen 14 abgestützt. Die Dachöffnung 11 ist mindestens vorne und seitlich von einem unter der festen Dachfläche sitzenden Dachverstärkungsrahmen 15 umgriffen, der mit der festen Dachfläche 10 beispielsweise verklebt oder punktverschweißt sein kann. Bei der Ausführungsform gemäß Fig. 2 weist der Führungsrahmen 14 ein Rahmenunterteil 16 und ein damit verbundenes Rahmenoberteil 17 auf. Rahmenunterteil 16 und Rahmenoberteil 17 können im Bereich von nach außen abstehenden Flanschen 18 und 19 beispielsweise miteinander punktverschweißt oder verliebt sein.

Der Führungsrahmen 14 ist mit dem Dachverstärkungsrahmen 15 über Befestigungselemente in Form von Schrauben 20 verbunden, die Teil einer insgesamt mit 21 bezeichneten Höhenjustiereinrichtung sind. In Fig. 2 ist nur eine der Schrauben 20 zu erkennen. Es versteht sich, daß auf beiden Dachseiten in Fahrzeuglängsrichtung mindestens zwei solche Schrauben in zweckentsprechendem gegenseitigem Abstand voneinander angeordnet sind. Jede der Schrauben 20 durchgreift ein Langloch 22 in einem mindestens näherungsweise lotrecht verlaufenden Schenkel 23 des Rahmenoberteils 17. Die längere Achse des Langlochs 22 erstreckt sich in lotrechter Richtung. Die Schrauben 20 sind in jeweils ein Gewindeloch 24 des Dachverstärkungsrahmens 15 eingeschraubt, wobei die Längsachse der Schrauben 20 mindestens näherungsweise waagrecht verläuft. Der Kopf 25 der Schrauben 20 legt sich an die von dem Dachverstärkungsrahmen 15 abgewendete Innenseite des Schenkels 23 des Rahmenoberteils 17 an. Gegebenenfalls kann auf der von dem Rahmenoberteil 17 abgewendeten Außenseite des Dachverstärkungsrahmens 15 auch im Bereich der Langlöcher 22 des Schenkels 23 jeweils eine Mutter oder dergleichen angebracht sein, die in Fig. 2 bei 26 gestrichelt angedeutet ist und in die sich die Schraube 20 einschrauben läßt.

Sowohl der Dachverstärkungsrahmen 15 als auch das Rahmenoberteil 17 weisen an ihrem obenliegenden Ende einen nach innen abgewinkelten Flansch 27 bzw. 28 auf. Um den Flansch 27 des Dachverstärkungsrahmens 15 ist der den Rand 29 der Dachöffnung 11 bildende Teil der festen Dachfläche 10 herumgelegt. Auf den Flansch 28 des Rahmenoberteils 17 ist eine Randspaltdichtung 30 aufgesteckt. Die Randspaltdichtung 30 hat entsprechend Fig. 2 im wesentlichen einen L-förmigen Querschnitt, und der Flansch 28 greift in einen Schlitz des waagrechten Schenkels 31 der Randspaltdichtung 30 ein. Die Randspaltdichtung 30 kann mit dem Flansch 28 verliebt oder in anderer Weise mit Bezug auf das Rahmenteil 17 lagefixiert sein. Das innenliegende Ende des Flanschs 28 ist nach oben abgebogen, wodurch für eine zusätzliche Sicherung der Randspaltdichtung 30 gegen Abziehen von dem Rahmenoberteil 17 gesorgt ist. Der lotrechte Schenkel 32 der Randspaltdichtung 30 dichtet bei in Schließstellung befindlichem Deckel 12 den Randspalt 33 zwischen dem Deckelaußenrand und dem Rand 29 der Dachöffnung 11 ab.

Der Führungsrahmen 14 ist von einem Himmel 34 untergriffen. Der Himmel 34 verblendet mindestens den Führungsrahmen 14 und die Höhenjustiereinrichtung 21 von unten.

Der Führungsrahmen 14 und die Deckelbetätigungseinrichtung 13 sowie gegebenenfalls weitere Dachteile können zweckmäßig zu einer vormontierten Einbaueinheit 35 zusammengefaßt sein, wie dies an sich aus der DE 29 14 855 C2 bekannt ist. Zu einer solchen Einbaueinheit 35 gehören vorliegend vorzugsweise auch die Randspaltdichtung 30 und der Himmel 34.

Zur Montage des Daches wird die Einbaueinheit 35 unterhalb der festen Dachfläche 10 eingesetzt und dann in eine Lage angehoben, in welcher der Außenrand des Deckels 12 bündig zu dem angrenzenden Teil der festen Dachfläche 10 ist. Eine solche Höheneinstellung wird durch eine entsprechende Bemessung des Langlochs 22 möglich. Die auf den Flansch 28 aufgesteckte Randspaltdichtung 30 wird von unten gegen den Randbereich der Dachöffnung 11 angelegt und mit ihrem Schenkel 31 zwischen den Flanschen 27 und 28 festgehalten.

Nach erfolgter Höhenausrichtung werden die Schrauben 20 mittels eines Schraubendrehers 36 festgezogen. Der Führungsrahmen 14 wird auf diese Weise mit Bezug auf den Dachverstärkungsrahmen 15 in der justierten Stellung fixiert.

Die erläuterte Höheneinstellung läßt sich bei bereits vormontiertem Himmel 34 durchführen, ohne daß Durchbrüche durch den Himmel 34 notwendig sind, weil die Höhenjustiereinrichtung 21 von einer über dem Himmel 34 liegenden, frei zugänglichen Stelle aus betätigbar ist.

Bei der abgewandelten Ausführungsform gemäß Fig. 3 ist ein einteiliger Führungsrahmen 14' vorgesehen. An dem Führungsrahmen 14' ist über Befestigungselemente 40 ein Himmel 34' angebracht, welcher die Höhenjustiereinrichtung 21, den Führungsrahmen 14' und die nach außen angrenzenden Dachteile untergreift. Bei 41 sind Antriebskabel dargestellt, die in bekannter Weise Teil der Deckelbetätigungseinrichtung sind. Die Höhenjustiereinrichtung 21 ist auch in diesem Fall so angeordnet und ausgerichtet, daß sie zwecks Höhenverstellung des Deckels 12 bei montiertem Himmel 34' von einer über dem Himmel 34' liegenden frei zugänglichen Stelle aus mittels eines Schraubendrehers 36 betätigt werden kann. In gleicher Weise wie beim zuvor erläuterten Ausführungsbeispiel gehören zu der Höhenjustiereinrichtung 21 Schrauben 20, die Langlöcher 22 des Führungsrahmens 14 mindestens näherungsweise waagrecht durchgreifen und in Gewindelöcher des Dachverstärkungsrahmens 15' eingeschraubt sind.

Abweichend von der Ausführungsform gemäß Fig. 2 ist eine Randspaltdichtung 30' auf den Rand des Deckels 12 aufgesetzt.

Bei den in den Fign. 2 und 3 veranschaulichten Ausführungsbeispielen liegen im Verbindungsbereich von Führungsrahmen und Verstärkungsteil, von der Dachöffnung aus gesehen, der Führungsrahmen innen und das Verstärkungsteil außen. Die Anordnung kann grundsätzlich aber auch umgekehrt getroffen sein. In einem solchen Fall befinden sich dann die Langlöcher 22 im Verstärkungsteil, während die Gewindelöcher 24 im Führungsrahmen oder einer mit dem Führungsrahmen verbundenen Mutter oder dergleichen ausgebildet sind. Desweiteren können an Stelle der Langlöcher 22 auch andere Ausnehmungen vorgesehen sein, sofern sie nur eine Höhenverstellung des Führungsrahmens erlauben. Beispielsweise kann es sich bei solchen Ausnehmungen auch um einseitig offene Schlitze handeln.

## Patentansprüche

1. Fahrzeugdach mit einem Deckel zum wahlweisen Verschließen oder mindestens teilweisen Freilegen einer Dachöffnung (11) in einer festen Dachfläche (10), mit einem den Deckel (12) über eine Deckelbetätigungseinrichtung (13) tragenden Führungsrahmen (14), der mit einem an der festen Dachfläche (10) befestigten Verstärkungsteil (15) über Befestigungselemente (20) verbunden ist, die Teil einer Höhenjustiereinrichtung (21) zum Einstellen und Fixieren der Höhenlage des Deckels (12) gegenüber der festen Dachfläche (10) sind, und mit einem mindestens den Führungsrahmen (14) und die Höhenjustiereinrichtung (21) von unten verblendenden Himmel (34), **dadurch gekennzeichnet,** daß die Höhenjustiereinrichtung (21) mit Bezug auf den Führungsrahmen (14)derart angeordnet und ausgerichtet ist, daß sie zwecks Höhenverstellung des Deckels (12) bei montiertem Himmel (34) von einer über dem Himmel liegenden, frei zugänglichen Stelle aus betätigbar ist.

2. Fahrzeugdach nach Anspruch 1, dadurch gekennzeichnet, daß die Höhenjustiereinrichtung (21) die Befestigungselemente bildende Schrauben (20) aufweist, welche eine Höhenverstellung des Führungsrahmens (14) erlaubende Ausnehmungen (Langlöcher 22) in einem mindestens näherungsweise lotrecht verlaufenden Schenkel (23) des Führungsrahmens (14) oder des Verstärkungsteils (15) durchgreifen und in Gewindelöcher (24) des jeweils anderen der beiden letztgenannten Bauteile (Verstärkungsteil 15 bzw. Führungsrahmen 14) oder von Bauelementen (26) eingeschraubt sind, die auf der von dem einen Bauteil (Führungrahmen 14 bzw. Verstärkungsteil 15) abliegenden Seite des jeweils anderen Bauteils sitzen.

3. Fahrzeugdach nach Anspruch 2, dadurch gekennzeichnet, daß die eine Höhenverstellung des Führungsrahmens (14) erlaubenden Ausnehmungen als Langlöcher (22) mit im wesentlichen lotrecht ausgerichteter Längsachse in dem Führungsrahmen (14) ausgebildet sind.

4. Fahrzeugdach nach einem der vorhergehenden Ansprüche, dadurch gekennzeichnet, daß der Himmel (34) Teil einer mindestens den Führungsrahmen (14) und die Deckelbetätigungseinrichtung (13) umfassenden Einbaueinheit (35) ist.

5. Fahrzeugdach nach einem der vorhergehenden Ansprüche, dadurch gekennzeichnet, daß der Führungsrahmen (14) eine Randspaltdichtung (30) zum Abdichten des Randspalts (33) zwischen dem in der Schließstellung befindlichen Deckel (12) und dem Rand (29) der Dachöffnung (11) trägt.

6. Fahrzeugdach nach Ansprüchen 4 und 5, dadurch gekennzeichnet, daß die Randspaltdichtung (30) gleichfalls Teil der Einbaueinheit (35) ist.
